(19) **Europäisches Patentamt**

**European Patent Office**

**Office européen des brevets**

(11) **EP 4 752 498 A1**

(12) **EUROPÄISCHE PATENTANMELDUNG**

(43) Veröffentlichungstag:
**03.06.2026  Patentblatt 2026/23**

(21) Anmeldenummer: **25202422.9**

(22) Anmeldetag: **16.09.2025**

(51) Internationale Patentklassifikation (IPC):
**G01B 11/00** *(2006.01)*      **G01B 7/00** *(2006.01)*

(52) Gemeinsame Patentklassifikation (CPC):
**G01B 7/003; G01B 11/002**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **27.11.2024  DE 102024003934**

(71) Anmelder: **Dr. Johannes Heidenhain GmbH 83301 Traunreut (DE)**

(72) Erfinder:
- **MUSCH, Bernhard 83301 Traunreut (DE)**
- **GRESSITZEK, Johann 84508 Burgkirchen (DE)**

(54) **POSITIONSMESSEINRICHTUNG**

(57)  Die Erfindung betrifft eine Positionsmesseinrichtung zur Erfassung der Relativposition zweier Objekte, wobei die Objekte entlang einer translatorischen Hauptbewegungsrichtung und in weiteren Freiheitsgraden relativ zueinander beweglich sind. Ein in der Hauptbewegungsrichtung längserstreckter Maßstabträger weist eine erste, eine zweite und eine dritte Oberfläche auf, durch die jeweils eine Ebene definiert ist und wobei auf jeder Oberfläche jeweils mindestens eine Messteilung angeordnet ist. Eine relativ gegenüber dem Maßstabträger bewegliche Abtastbaugruppe umfasst mehre- re Abtasteinheiten, die zur Erzeugung verschiebungsabhängiger Positionssignale aus der Abtastung der Messteilungen ausgebildet sind, wobei jeder Oberfläche mindestens eine Abtasteinheit zugeordnet ist. Die durch die zweite Oberfläche definierte Ebene unterteilt den umgebenden Raum in zwei Halbräume, wobei in einem der Halbräume die erste Oberfläche mit mindestens einer Messteilung angeordnet ist und im anderen Halbraum die dritte Oberfläche mit mindestens einer Messteilung angeordnet ist

FIG. 1a

EP 4 752 498 A1

**Beschreibung**

## GEBIET DER TECHNIK

Die vorliegende Erfindung betrifft eine Positionsmesseinrichtung zur Erfassung der Relativposition zweier Objekte, die in mehreren Bewegungsfreiheitsgraden relativ zueinander beweglich angeordnet sind.

## STAND DER TECHNIK

Die WO 2017/080612 A1 offenbart eine Positionsmesseinrichtung zur Messung der Relativlage zweier zueinander beweglicher Objekte in einer Vorschubrichtung und in weiteren Freiheitsgraden. Diese Positionsmesseinrichtung umfasst einen in Vorschubrichtung längserstreckten prismatischen Trägerkörper mit mehreren Oberflächen, die jeweils eine Messteilung tragen sowie mit einer relativ dazu beweglichen Abtastbaugruppe mit mehreren Abtasteinheiten zur Abtastung der Messteilungen. Derartige Positionsmesseinrichtungen finden beispielsweise Anwendung zum Messen von Fehlern in Koordinatenmessgeräten. Die damit erfassten Messwerte können zur Korrektur von Fehlern des Koordinatenmessgeräts und Kalibrierung des Koordinatenmessgeräts genutzt werden.

Abtastseitig ist in der bekannten Positionsmesseinrichtung aus der WO 2017/080612 A1 ein mechanischer Halter für die Mehrzahl von Abtasteinheiten erforderlich, der den Trägerkörper umgreift. Ein derartiger Umgriff erfordert üblicherweise einen gewissen Bauraum, der in manchen Anwendungen nicht verfügbar ist.

## ZUSAMMENFASSUNG DER ERFINDUNG

Der vorliegenden Erfindung liegt die Aufgabe zugrunde, eine kompakt bauende Positionsmesseinrichtung anzugeben, mit der eine präzise Positionsmessung bezüglich der Relativlage zweier zueinander beweglicher Objekte in mehreren Bewegungsfreiheitsgraden ermöglicht wird.

Diese Aufgabe wird erfindungsgemäß durch eine Positionsmesseinrichtung mit den Merkmalen des Anspruchs 1 gelöst.

Vorteilhafte Ausführungsformen der erfindungsgemäßen Positionsmesseinrichtung werden über die abhängigen Ansprüche charakterisiert.

Die erfindungsgemäße Positionsmesseinrichtung ist ausgebildet zur Erfassung der Relativposition zweier Objekte, wobei die Objekte entlang einer translatorischen Hauptbewegungsrichtung und in weiteren Freiheitsgraden relativ zueinander beweglich sind. Die Vorrichtung umfasst einen in der Hauptbewegungsrichtung längserstreckten Maßstabträger, der eine erste, eine zweite und eine dritte Oberfläche aufweist, durch die jeweils eine Ebene definiert ist und wobei auf jeder Oberfläche jeweils mindestens eine Messteilung angeordnet ist. Ferner ist eine relativ gegenüber dem Maßstabträger bewegliche Abtastbaugruppe mit mehreren Abtasteinheiten vorgesehen, die zur Erzeugung verschiebungsabhängiger Positionssignale aus der Abtastung der Messteilungen ausgebildet sind, wobei jeder Oberfläche mindestens eine Abtasteinheit zugeordnet ist. Die durch die zweite Oberfläche definierte Ebene unterteilt den umgebenden Raum in zwei Halbräume, wobei in einem ersten Halbraum die erste Oberfläche mit mindestens einer Messteilung angeordnet ist und im zweiten Halbraum die dritte Oberfläche mit mindestens einer Messteilung angeordnet ist.

Vorzugsweise ist der Schnittwinkel zwischen der ersten und zweiten Ebene sowie der Schnittwinkel zwischen der zweiten und dritten Ebene jeweils im Bereich zwischen 60° und 179° gewählt, wobei der Schnittwinkel zwischen der ersten und zweiten Ebene im ersten Halbraum angetragen sei und der Schnittwinkel zwischen der zweiten und dritten Ebene im zweiten Halbraum.

Mit Vorteil sind dabei die beiden Schnittwinkel derart gewählt, dass die erste Ebene und die dritte Ebene parallel zueinander orientiert sind.

Weiterhin kann vorgesehen sein, dass die Schnittgerade zwischen der ersten und zweiten Ebene sowie die Schnittgerade zwischen der zweiten und dritten Ebene jeweils parallel zur Hauptbewegungsrichtung orientiert ist und sich die zweite Oberfläche zwischen den beiden genannten Schnittgeraden befindet.

Vorzugsweise sind die drei Oberflächen des Maßstabträgers, die Messteilungen und die Abtasteinheiten derart angeordnet und ausgebildet, dass die Lage der Abtastbaugruppe relativ zum Maßstabträger in sechs Bewegungsfreiheitsgraden bestimmbar ist.

In einer vorteilhaften Ausführungsform sind mindestens zwei Oberflächen mindestens zwei Abtasteinheiten zugeordnet.

Weiterhin können mindestens einer Oberfläche zwei Abtasteinheiten zugeordnet sein, die unterschiedliche Messrichtungen besitzen, wobei die Messrichtung einer Abtasteinheit diejenige translatorische Verschieberichtung angibt, entlang der die verschiebungsabhängigen Positionssignale erzeugbar sind.

Dabei ist möglich, dass der Maßstabträger auf derjenigen Oberfläche, die den Abtasteinheiten mit unterschiedlichen Messrichtungen zugeordnet ist, zwei unterschiedlich orientierte Messteilungen aufweist, deren Teilungsstriche nicht parallel zueinander angeordnet sind.

Vorzugsweise sind die Messteilungen als optisch abtastbare Inkrementalteilungen ausgebildet.

In einer möglichen Ausführungsform ist vorgesehen, dass

- jeder Oberfläche mindestens eine Abtasteinheit zugeordnet ist, deren Messrichtung senkrecht zur Hauptbewegungsrichtung orientiert ist, und
- einer zweiten Oberfläche sowie einer weiteren Oberfläche jeweils mindestens zwei Abtasteinheiten zugeordnet sind, deren Messrichtungen senkrecht zur Hauptbewegungsrichtung orientiert sind, und

- mindestens einer Oberfläche mindestens eine Abtasteinheit zugeordnet ist, deren Messrichtung parallel zur Hauptbewegungsrichtung orientiert ist.

Weiterhin kann dabei vorgesehen sein, dass

- zwei benachbarten Oberflächen vier entlang der Hauptbewegungsrichtung angeordnete Abtasteinheiten mit zur Hauptbewegungsrichtung senkrechter Messrichtung zugeordnet sind und benachbarte Abtasteinheiten jeweils unterschiedlichen Oberflächen zugeordnet sind, und
- zwei weitere Abtasteinheiten, von denen mindestens eine der weiteren Oberfläche zugeordnet ist, entlang der Hauptbewegungsrichtung in Lücken zwischen den vier anderen Abtasteinheiten angeordnet sind.

Zudem ist möglich, dass die Teilungsstriche der Messteilungen sowie die Messrichtungen der Abtasteinheiten gegenüber der Hauptbewegungsrichtung oder einer Senkrechten auf die Hauptbewegungsrichtung geneigt angeordnet sind.

In einer weiteren Ausführungsform kann vorgesehen sein, dass

- jeder Oberfläche zwei Messteilungen zugeordnet sind, deren Teilungsstriche in Bezug auf eine zentrale Symmetrieachse spiegelsymmetrisch zueinander und geneigt gegenüber der Hauptbewegungsrichtung angeordnet sind, und
- den beiden Messteilungen auf jeder Oberfläche jeweils eine Abtasteinheit zugeordnet ist und die beiden Abtasteinheiten einer Oberfläche zueinander orthogonale Messrichtungen besitzen.

Die erfindungsgemäße Positionsmesseinrichtung ermöglicht die kompakte Anordnung der erforderlichen Abtasteinheiten auf einer Seite des Maßstabträgers und vermeidet somit einen Umgriff desselbigen. Die mechanische Halterung für die Abtasteinheiten in der Abtastbaugruppe kann dadurch mit geringerer Masse und höherer Steifigkeit realisiert werden als in einer Messanordnung mit Umgriff. Weiterhin ist die Erfassung der Bewegungs-Freiheitsgrade mit hoher Empfindlichkeit gewährleistet. Je nach Messaufgabe kann die erfindungsgemäße Positionsmesseinrichtung hinsichtlich bestimmter Anforderungen flexibel ausgelegt werden, beispielsweise für Anwendungen, die eine kompakte Gesamtanordnung erfordern oder aber für Anwendungen, die einen größeren Bewegungsspielraum in einer bestimmten Bewegungsrichtung erfordern.

Weitere Einzelheiten und Vorteile der vorliegenden Erfindung werden anhand der nachfolgenden Beschreibung von möglichen Ausgestaltungen der Erfindung in Verbindung mit den Figuren erläutert.

## KURZE BESCHREIBUNG DER ZEICHNUNGEN

Es zeigt

Figur 1a eine Schnittansicht eines ersten Ausführungsbeispiels der erfindungsgemäßen Positionsmesseinrichtung mit einem Trägerkörper und einer Abtastbaugruppe;

Figur 1b eine Draufsicht auf die Positionsmesseinrichtung gemäß Figur 1a;

Figur 2 eine Draufsicht auf ein zweites Ausführungsbeispiel der erfindungsgemäßen Positionsmesseinrichtung;

Figur 3 eine Draufsicht auf ein drittes Ausführungsbeispiel der erfindungsgemäßen Positionsmesseinrichtung;

Figur 4 eine Draufsicht auf ein viertes Ausführungsbeispiel der erfindungsgemäßen Positionsmesseinrichtung.

## BESCHREIBUNG DER AUSFÜHRUNGSFORMEN

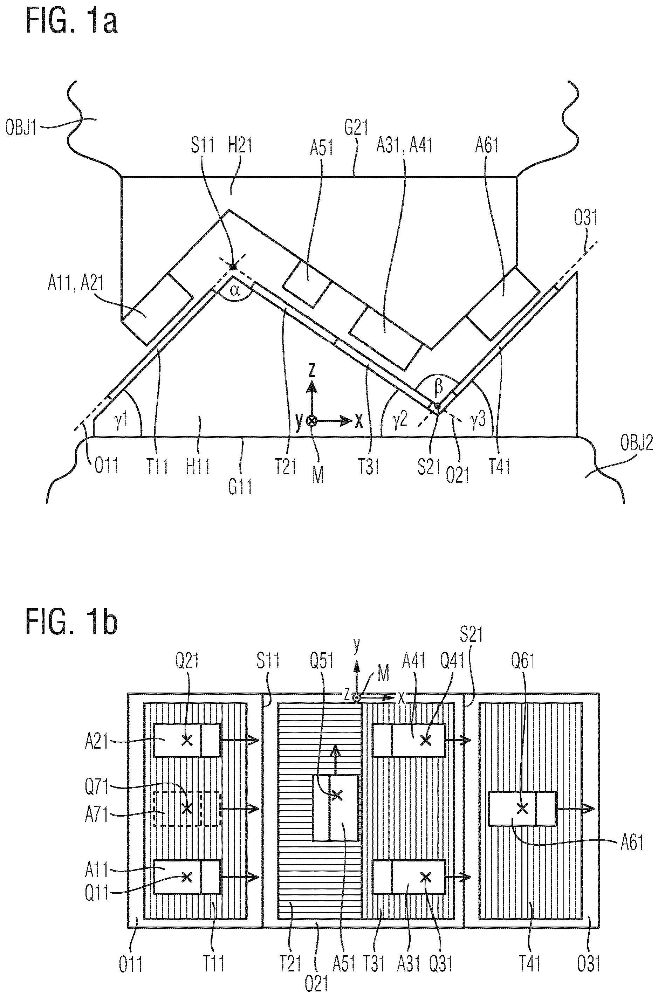

Ein erstes Ausführungsbeispiel der erfindungsgemäßen Positionsmesseinrichtung wird nachfolgend anhand der schematisierten Darstellungen in den Figuren 1a und 1b erläutert. Figur 1a zeigt hierbei eine Schnittansicht der Positionsmesseinrichtung in der xz-Ebene, Figur 1b eine Draufsicht auf die Positionsmesseinrichtung aus der z-Richtung.

Die dargestellte Positionsmesseinrichtung dient zur Erfassung der Relativposition zweier in Figur 1a nur schematisch angedeuteter Objekte OBJ1, OBJ2 in allen sechs Starrkörper-Bewegungsfreiheitsgraden; nachfolgend sei diesbezüglich nur noch von Bewegungsfreiheitsgraden die Rede. Bei den beiden Objekten OBJ1, OBJ2 kann es sich z.B. um Maschinenkomponenten handeln, die in der Anwendung in definierter Art und Weise zueinander bewegt werden und deren Relativposition erfasst werden muss. Die Hauptbewegungsrichtung des Objekts OBJ1 relativ zum Objekt OBJ2 verläuft im dargestellten Beispiel entlang der y-Achse des eingezeichneten Koordinatensystems M. In Figur 1a ist die Hauptbewegungsrichtung demnach senkrecht zur Zeichenebene orientiert. Die Hauptbewegungsrichtung ist dadurch ausgezeichnet, dass entlang dieser Richtung die erfindungsgemäße Positionsmesseinrichtung einen möglichst großen Bewegungsspielraum ermöglichen soll. In den fünf restlichen Bewegungsfreiheitsgraden resultieren wesentlich kleinere Bewegungen. Die fünf weiteren Bewegungsfreiheitsgrade lassen sich bezogen auf das Koordinatensystem M in Figur 1a wie folgt angeben:

- Translation des Objekts OBJ1 entlang der x-Richtung des Koordinatensystems M
- Translation des Objekts OBJ1 entlang der z-Richtung des Koordinatensystems M
- Rotation des Objekts OBJ1 um die x-Achse des Koordinatensystems M
- Rotation des Objekts OBJ1 um die y-Achse des Koordinatensystems M
- Rotation des Objekts OBJ1 um die z-Achse des Koordinatensystems M

Das Objekt OBJ2 ist in der erfindungsgemäßen Positionsmesseinrichtung mit einem Maßstabträger H11 verbunden. Der Maßstabträger H11 weist zumindest drei Oberflächen auf, durch die jeweils eine Ebene O11, 021, 031 definiert ist und wobei auf jeder Oberfläche jeweils mindestens eine Messteilung T11, T21, T31, T41 angeordnet ist. Die Messteilungen T11, T21, T31, T41 können z.B. als Inkrementalteilungen ausgebildet sein, die jeweils aus einer periodischen Anordnung von Teilungsbereichen bestehen.

Alternativ zum dargestellten Beispiel wäre es natürlich auch möglich, dass das Objekt und der Maßstabträger als einziges Bauteil ausgebildet sind. Weiterhin wäre auch denkbar, dass die Messteilungen nicht als separate Bauteile auf dem Maßstabträger angeordnet sind, sondern als integrale Bestandteile des Maßstabträgers ausgebildet sind.

Mit dem anderen Objekt OBJ1 ist eine Abtastbaugruppe H21 der Positionsmesseinrichtung verbunden, die mehrere, starr miteinander gekoppelte Abtasteinheiten A11, A21, A31, A41, A51, A61 umfasst, die jeweils zur Erzeugung verschiebungsabhängiger Positionssignale aus der Abtastung der Messteilungen T11, T21, T31, T41 auf dem Maßstabträger H11 ausgebildet sind. Alternativ zum dargestellten Beispiel wäre es natürlich auch möglich, dass das Objekt und die Abtastbaugruppe als einziges Bauteil ausgebildet sind. Zur Erfassung der sechs Bewegungsfreiheitsgrade weist die Abtastbaugruppe H21 mindestens sechs Abtasteinheiten A11, A21, A31, A41, A51, A61 auf.

Die einzelnen Abtasteinheiten A11 - A61 sind jeweils dazu ausgebildet, über die Abtastung der zugehörigen Messteilung T11 - T41 die Verschiebung der jeweiligen Abtasteinheit A11 - A61 gegenüber der Messteilung T11 - T41 zu erfassen. Im Rahmen der vorliegenden Erfindung können die Abtasteinheiten A11 - A61 hierbei von optischen, magnetischen, induktiven oder kapazitiven Messprinzipien Gebrauch machen. Für eine hochauflösende Messung kann etwa ein optisches Abtastprinzip genutzt werden, wie es z.B. aus der EP 0 163 362 A1 der Anmelderin bekannt ist. Je nach verwendetem Abtastprinzip ist dann die zugehörige Messteilung auszubilden. So besteht etwa im Fall der optischen Abtastung eine inkrementale Messteilung aus einer periodischen Anordnung von Teilungsbereichen bzw. Teilungsstrichen mit unterschiedlichen optischen Eigenschaften, also z.B. Teilungsbereiche mit hoher und niedriger Reflektivität.

Diejenige translatorische Verschieberichtung, entlang der über die Abtasteinheiten jeweils die verschiebungsabhängigen Positionssignale erzeugbar sind bzw. entlang derer sich die Positionssignale bei einer Verschiebung um eine feste Strecke am stärksten ändern, sei im Folgenden auch als Messrichtung bezeichnet; die Messrichtung kann dabei durch einen dreidimensionalen Vektor dargestellt werden. In den Figuren sind die den Abtasteinheiten A11 - A61 zugeordneten Messrichtungen jeweils über Pfeile an den Abtasteinheiten A11 - A61 veranschaulicht. Hierbei ist zu beachten, dass die Messrichtungs-Vektoren im Allgemeinen nicht flach in der Zeichenebene liegen, da die die Messteilungen T11 - T41 gegenüber der Zeichenebene geneigt angeordnet sind, wie z.B. aus der Ansicht in Figur 1a ersichtlich ist. Üblicherweise ergibt sich die jeweilige Messrichtung einer Abtasteinheit A11 - A61 über die Ausrichtung der zugehörigen Messteilung T11 - T41, die Ausrichtung der Abtasteinheit A11 - A61 und den konkreten Aufbau der Abtasteinheit A11 - A61. In der vorliegenden Erfindung werden ausschließlich Abtasteinheiten A11 - A61 verwendet, deren Messrichtung konstruktionsbedingt in der Ebene der Messteilung T11 - T41 liegt.

Zu erwähnen ist noch, dass in den Figuren die verwendeten Abtasteinheiten A11 - A61 aus Gründen der besseren Übersichtlichkeit als voneinander getrennte Objekte dargestellt werden. In der Praxis wäre es jedoch auch möglich, mehrere Abtasteinheiten in einem gemeinsamen Gehäuse zu integrieren, um dadurch z.B. im Fall eines optischen Abtastprinzips optische und/oder elektronische Bauteile gemeinsam durch mehrere Abtasteinheiten zu nutzen.

Im Folgenden seien verschiedene Design-Regeln und -Überlegungen erläutert, die die geometrische Ausbildung des Maßstabträgers H11, die Anordnung der Oberflächen mit den Messteilungen T11, T21, T31, T41 sowie die Ausbildung der Abtastbaugruppe H21 in der erfindungsgemäßen Positionsmesseinrichtung betreffen.

So ist eine Ausbildung des Maßstabträgers H11 dergestalt vorgesehen, dass sich die Ebenen O11, 021, 031 der drei Oberflächen in mindestens zwei Schnittgeraden S11, S21 schneiden, die entlang der y-Richtung und damit parallel zur Hauptbewegungsrichtung verlaufen.

Die der zweiten Ebene O21 bzw. zweiten Oberfläche zugeordneten Messteilungen T21, T31 befinden sich zwischen den beiden Schnittgeraden S11, S21 der zweiten Ebene 021 mit der ersten Ebene O11 bzw. dritten Ebene 031.

Die zweite Ebene O21 unterteilt den sie umgebenden Raum in zwei Halbräume. In einem der Halbräume, nachfolgend auch als erster Halbraum bezeichnet (links unten in Figur 1a) ist dabei die erste Oberfläche O11 mit mindestens einer Messteilung T11 angeordnet; im anderen Halbraum, nachfolgend auch als zweiter Halbraum bezeichnet (rechts oben in Figur 1a) ist die dritte Oberfläche O31 mit ebenfalls mindestens einer Messteilung T41 angeordnet

Der Schnittwinkel zwischen der ersten Ebene O11 und der zweiten Ebene 021 ist in Figur 1a mit $\alpha$ bezeichnet, wobei dieser Schnittwinkel im ersten Halbraum (links unten) angetragen ist, in dem sich die Messteilung T11 der ersten Ebene O11 befindet. Mit $\beta$ ist in Figur 1a der Schnittwinkel zwischen der zweiten Ebene 021 und der dritten Ebene 031 bezeichnet; der Schnittwinkel $\beta$ ist dabei im anderen, zweiten Halbraum (rechts oben) angetragen, in dem sich die Messteilung T41 der dritten Ebene 031 befindet. Vorzugsweise werden die Schnittwinkel $\alpha$, $\beta$ jeweils im Bereich zwischen 60° und 179° gewählt. Aus praktischen Gründen kann dabei auch die Wahl $\alpha = \beta$ vorteilhaft sein. In diesem Fall sind die beiden Ebenen O11 und 031 parallel zueinander orientiert. Weiterhin kann der Fall $\alpha \approx 90°$ und $\beta \approx 90°$ vorteilhaft sein, um aus den verschiebungsabhängigen Positionssignalen die sechs Bewegungsfreiheitsgrade zu ermitteln.

Wie aus den Figuren 1a und 1b ersichtlich, sind mindestens zwei der drei Ebenen O11, 021, 031 jeweils mehr als eine Abtasteinheit A11 - A61 zugeordnet. Im konkreten Beispiel sind der ersten Ebene O11 die beiden Abtasteinheiten A11, A21 zugeordnet und der zweiten Ebene 021 die drei Abtasteinheiten A31, A41, A51.

Weiterhin ist vorgesehen, dass mindestens einer der Oberflächen bzw. Ebenen O11 - 031 mindestens zwei Abtasteinheiten A11 - A61 zugeordnet sind, die unterschiedliche Messrichtungen aufweisen. Im Beispiel der Figuren 1a, 1b ist dies die zweite Oberfläche bzw. zweite Ebene O21, der zum einen die Abtasteinheit A51 zugeordnet ist, deren Messrichtung entlang der y-Richtung orientiert ist; zum anderen sind dieser Ebene 021 die beiden Abtasteinheiten A31, A41 zugeordnet, deren Messrichtung jeweils senkrecht zur y-Richtung orientiert ist. Wie aus Figur 1b ersichtlich, sind hierfür auf der zweiten Oberfläche zwei Messteilungen T21, T31 in separaten Spuren angeordnet, deren Teilungsstriche nicht parallel zueinander, sondern orthogonal zueinander ausgerichtet sind. Die Messteilung T21 besteht aus einer periodischen Anordnung von Teilungsstrichen entlang der y-Richtung, also der Messrichtung der zugehörigen Abtasteinheit A51; die Längsrichtung der Teilungsstriche erstreckt sich dabei entlang der angegebenen x-Richtung, also senkrecht zur y-Richtung. Die Messteilung T31 besteht aus einer periodischen Anordnung von Teilungsstrichen senkrecht zur y-Richtung, also der Messrichtung der beiden zugehörigen Abtasteinheiten A31, A41. Alternativ zu separaten Spuren könnte auch eine Messteilung vorgesehen werden, die auf einer einzigen Spur den Betrieb von Abtasteinheiten mit unterschiedlichen Messrichtungen ermöglicht. Konkret wäre im vorliegenden Ausführungsbeispiel auch möglich, dass eine sog. Kreuzgitter-Messteilung verwendet würde, die von Abtasteinheiten mit zueinander orthogonalen Messrichtungen abgetastet wird.

Im konkreten Ausführungsbeispiel der Figuren 1a, 1b ist weiterhin vorgesehen, dass jeder der drei Ebenen O11, 021, 031 mindestens eine Abtasteinheit zugeordnet ist, die eine Messrichtung senkrecht zur Hauptbewegungsrichtung besitzt. Gemäß Figur 1b sind dies die Abtasteinheiten A11, A21, A31, A41, A61. Ferner sind der mittleren Ebene O2 und mindestens einer weiteren Ebene O1 oder O2 mindestens zwei Abtasteinheiten zugeordnet, die Messrichtungen besitzen, die senkrecht zur Hauptbewegungsrichtung orientiert sind. Schließlich ist mindestens einer der drei Ebenen O1, O2, O3 eine Abtasteinheit zugeordnet, deren Messrichtung parallel zur Hauptbewegungsrichtung, d.h. der y-Richtung, orientiert ist; vorliegend wäre dies die Abtasteinheit A51.

Im dargestellten Beispiel der Figuren 1a, 1b weist die Abtastbaugruppe H21 eine ebene Grundfläche G21 auf und der Maßstabträger H11 eine ebene Grundfläche G11. Diese beiden Grundflächen G21, G11 sind parallel zur Hauptbewegungsrichtung, also der y-Richtung, orientiert. Weiterhin sind beide Grundflächen G11, G21 innerhalb der Betriebstoleranzen in etwa parallel zueinander orientiert. In diesem Fall lassen sich Steigungswinkel $\gamma_1$, $\gamma_2$ und $\gamma_3$ zwischen den Oberflächen O11, 021, 031 und der Grundfläche G11 des Maßstabträgers H11 definieren, wie dies in Figur 1a gezeigt ist. Die oben erwähnten Schnittwinkel $\alpha$ und $\beta$, die die Neigungen der verschiedenen Oberflächen O11, 021, O32 zueinander charakterisieren, lassen sich dann über die Steigungswinkel $\gamma_1$, $\gamma_2$, $\gamma_3$ folgendermaßen ermitteln:

$$\alpha = 180° - \gamma_1 - \gamma_2,$$

$$\beta = 180° - \gamma_2 - \gamma_3.$$

Je nach Anforderung und Randbedingungen in der Messanwendung kann es erforderlich sein, die erfindungsgemäße Positionsmesseinrichtung so auszubilden, dass diese zwischen den beiden Grundflächen G11, G21 Platz findet und mit möglichst geringem Abstand zwischen den beiden Grundflächen G11 und G21 auskommt. In diesem Fall kann es vorteilhaft sein, dafür zu sorgen, dass eine der beiden Schnittgeraden S11, S21 möglichst nahe an der Grundfläche G11 liegt; im dargestellten Beispiel in Figur 1a wäre dies die Schnittgerade S21. Dadurch rücken die Abtasteinheiten A11 - A61 näher an den Maßstabträger H11. Um dies zu erreichen, sind die Breiten der Messteilungen T11 - T41 sowie Maßstabsbreiten und die Steigungswinkel $\gamma_1$, $\gamma_2$, $\gamma_3$ entsprechend zu wählen. Vorzugsweise sind dabei eher kleinere Steigungswinkel $\gamma_1$, $\gamma_2$, $\gamma_3$ zu wählen, was insgesamt zu einer flacheren und damit kompakteren Bauweise der Positionsmesseinrichtung führt.

Für den Fall, dass für unterschiedliche Messrichtungen in einer Ebene Platz für jeweils eine eigene Teilungsspur benötigt wird, können vorzugsweise nur in einer Ebene 021 Abtasteinheiten mit unterschiedlichen Messrichtungen vorgesehen sein. In diesem Fall kann zur Bauraum-Minimierung weiterhin vorgesehen sein, den Steigungswinkel $\gamma_2$ der zugehörigen Ebene 021 etwas kleiner zu wählen als die beiden anderen Steigungswinkel $\gamma_1$, $\gamma_3$. Auf diese Weise steht für die dieser Ebene 021 zugeordnete Oberfläche eine größere Breite zur Verfügung, ohne dass die Gesamthöhe der Anordnung über der Grundfläche G11 anwächst. Dadurch ist es einfacher, zwei Messteilungs-Spuren auf dieser Oberfläche anzuordnen. Den anderen beiden Oberflächen bzw. Ebenen O11, 031 sind jeweils nur Abtasteinheiten A11, A21, A61 mit gleicher Messrichtung zugeordnet. Sie benötigen dementsprechend nur Platz für eine Messteilungs-Spur.

Weiterhin kann es sein, dass im Rahmen einer bestimmten Messaufgabe gefordert ist, dass die erfindungsgemäße Positionsmesseinrichtung, einen größeren Bewegungsspielraum ermöglicht in Bezug auf eine Verschiebung der Abtastbaugruppe H21 in eine Richtung, die in der Grundfläche G11 liegt und senkrecht zur Hauptbewegungsrichtung orientiert ist; im Beispiel der Figuren 1a, 1b wäre dies also ein größerer Bewegungsspielraum in der x-Richtung. In diesem Fall erweist sich als vorteilhaft, die Steigungswinkel $\gamma_1$, $\gamma_2$ und $\gamma_3$ eher klein zu wählen. Denn bewegt sich die Abtastbaugruppe H21 um eine Strecke $x$ in der besagten x-Richtung, dann ändert sich der Abstand der Abtasteinheiten A11 - A61 zu ihren zugeordneten Messteilungen T11 - T41 um die Beträge $x \sin \gamma_1$, bzw. $x \sin \gamma_2$, bzw. $x \sin \gamma_3$. Beispielsweise führt etwa die Wahl $\gamma_1 = \gamma_2 = \gamma_3 = 45°$, dazu, dass sich bei einer entsprechenden Verschiebung um $x$ der Abstand der Abtasteinheiten A11 - A61 von ihren Messteilungen T11 - T41 nur um den Betrag

$$x \sin(45°) = x/\sqrt{2}$$ verändert. Angenommen, die Abtasteinheit fällt aus, wenn der Abstand zur Messteilung betragsmäßig mehr als h vom nominalen Abstand abweicht, dann sind folglich mit der beschriebenen Anordnung Bewegungen entlang der x-Richtung im Bereich

$$-h\sqrt{2} < x < h\sqrt{2}$$ möglich, ohne dass dies zu einem Ausfall der Abtasteinheit führt. Man gewinnt also einen Faktor $\sqrt{2}$ gegenüber einer Anordnung, in der Messteilungen senkrecht zur Grundfläche G11 angeordnet wären.

Es kann hingegen auch sein, dass im Rahmen einer bestimmten Messaufgabe gefordert ist, dass die erfindungsgemäße Positionseinrichtung einen größeren Bewegungsspielraum ermöglicht in Bezug auf eine Verschiebung der Abtastbaugruppe H21 in eine Richtung, die senkrecht auf der Grundfläche G11 steht und senkrecht zur Hauptbewegungsrichtung orientiert ist; im Beispiel der Figuren 1a, 1b wäre dies also ein größerer Bewegungsspielraum in der z-Richtung. In diesem Fall erweist sich als vorteilhaft, die Steigungswinkel $\gamma_1$, $\gamma_2$ und $\gamma_3$ eher groß zu wählen. Denn bewegt sich die Abtastbaugruppe H21 um eine Strecke $z$ in der besagten z-Richtung, dann ändert sich der Abstand der Abtasteinheiten A11 - A61 zu ihren zugeordneten Messteilungen T11 - T41 um die Beträge $x \cos \gamma_1$, bzw. $x \cos \gamma_2$, bzw. $x \cos \gamma_3$.

Beispielsweise führt etwa die Wahl $\gamma_1 = \gamma_2 = \gamma_3 = 45°$ dazu, dass man einen Faktor $\sqrt{2}$ gegenüber einer Anordnung gewinnt, in der Messteilungen parallel zur Grundfläche G11 angeordnet wären.

Für das anhand der Figuren 1a und 1b beschriebene erste Ausführungsbeispiel der erfindungsgemäßen Positionsmesseinrichtung wird nachfolgend kurz skizziert, wie sich damit alle sechs Bewegungsfreiheitsgrade respektive Starrkörper-Freiheitsgrade der Abtastbaugruppe H21 relativ zum Maßstabsträger H11 ermitteln lassen.

Der Einfachheit halber sei angenommen, dass alle Abtasteinheiten A11 - A61 die gleiche Empfindlichkeit auf Translation entlang ihrer Messrichtung haben, d.h. alle Abtasteinheiten A11 - A61 weisen die gleiche Messwertänderung auf, wenn sie jeweils um die gleiche Länge entlang ihrer jeweiligen Messrichtung verschoben werden.

Die Messrichtungen der Abtasteinheiten A11 und A21 sind identisch. Daher weist die Differenz der Messwerte dieser beiden Abtasteinheiten A11, A21 keine Empfindlichkeit bezüglich einer beliebigen Translation (bzw. Verschiebung) der Abtastbaugruppe H21 auf, sondern nur bezüglich eines rotativen Freiheitsgrads. Die größte Empfindlichkeit der besagten Messwertdifferenz liegt für eine Rotation der Abtastbaugruppe H21 entlang einer zur Ebene O11 senkrechten ersten Drehachse vor. Diese erste Drehachse ist senkrecht zur Hauptbewegungsrichtung orientiert, die entlang bzw. parallel zur angegebenen y-Richtung verläuft.

Weiterhin sind die Messrichtungen der Abtasteinheiten A31 und A41 identisch. Daher weist die Differenz der Messwerte dieser beiden Abtasteinheiten A31, A41 keine Empfindlichkeit in Bezug auf eine beliebige Translation (bzw. Verschiebung) der Abtastbaugruppe H21, sondern nur bezüglich eines rotativen Freiheitsgrads. Die größte Empfindlichkeit der besagten Messwertdifferenz liegt für eine Rotation der Abtastbaugruppe H21 entlang einer zur Ebene 021 senkrechten zweiten Drehachse vor. Diese zweite Drehachse ist senkrecht zur Hauptbewegungsrichtung orientiert. Außerdem ist die zweite Drehachse nicht parallel zur ersten Drehachse orientiert, weil die Wahl eines Schnittwinkels $\alpha = 0$ oder $\alpha = 180°$ wie oben angegeben ausgeschlossen ist.

Für eine vereinfachte Darstellung wird im Folgenden weiterhin davon ausgegangen, dass $\alpha = \beta$ gilt, also dass die Ebenen O11 und 031 parallel sind. Außerdem wird davon ausgegangen, dass der Mittelpunkt zwischen den Abtastorten Q11 und Q21 der Abtasteinheiten A11 und A21 im Koordinatensystem M die gleiche y-Koordinate aufweist wie der Abtastort Q61 der Abtasteinheit A61.

Der Mittelwert der Messwerte der Abtasteinheiten A11 und A21 verhält sich in Bezug auf seine Empfindlichkeit gegenüber den sechs Bewegungsfreiheitsgraden wie der Messwert einer imaginären Abtasteinheit A71 mit gleicher Messrichtung und mit Abtastort Q71 am Mittelpunkt zwischen den Abtastorten Q11 und Q21 der Abtasteinheiten A11 und A21.

Die Messrichtungen der besagten imaginären Abtasteinheit A71 und der Abtasteinheit A61 sind identisch. Daher weist die Differenz der Messwerte dieser beiden Abtasteinheiten A71, A61 keine Empfindlichkeit für eine beliebige Translation (bzw. Verschiebung) der Abtastbaugruppe H21 auf, sondern nur für einen rotativen Freiheitsgrad. Die größte Empfindlichkeit liegt für eine Rotation der Abtastbaugruppe H21 entlang einer dritten Drehachse, nämlich der y-Achse vor, denn diese Achse steht senkrecht auf der gemeinsamen Messrichtung, und steht senkrecht auf dem Abstandsvektor zwischen den Abtastorten.

Die erste, zweite und dritte Drehachse sind vektoriell linear unabhängig voneinander. Somit sind mit der erfindungsgemäßen Positionsmesseinrichtung alle drei rotativen Bewegungsfreiheitsgrade unabhängig voneinander bestimmbar.

Die Messrichtungen der Abtasteinheiten A11 und A31 stehen senkrecht auf der Hauptbewegungsrichtung und sind linear unabhängig voneinander, weil die Wahl des Schnittwinkels $\alpha = 0$ oder $\alpha = 180°$ ausgeschlossen ist. Die Messrichtung der Abtasteinheit A51 ist parallel zur Hauptbewegungsrichtung. Damit sind die Messrichtungen der Abtasteinheiten A11, A31 und A51 ebenfalls linear unabhängig voneinander. Folglich sind mithilfe der Messwerte der Abtasteinheiten A11, A31 und A51 alle drei Translationsfreiheitsgrade der Abtastbaugruppe H21 unabhängig voneinander bestimmbar.

Die vorstehende obige Erläuterung ist lediglich dafür gedacht, grob zu veranschaulichen, wie mit Hilfe der erfindungsgemäßen Positionsmesseinrichtung die Bestimmung aller sechs Bewegungsfreiheitsgrade möglich ist. In der Praxis erfolgt die Ermittlung der Bewegungsfreiheitsgrade in der Regel durch Lösen eines Gleichungssystems. Für jede Abtasteinheit kann eine Gleichung aufgestellt werden, indem der erzeugte Messwert einem vorhergesagten Messwert gleichgesetzt wird, der sich unter Berücksichtigung des Abtastorts und der Messrichtung als Funktion der sechs Bewegungsfreiheitsgrade darstellen lässt. Falls mehr als sechs Abtasteinheiten zum Einsatz kommen, kann ein geeignetes Verfahren zum Einsatz kommen, um das resultierende überbestimmte Gleichungssystem unter Berücksichtigung von Messabweichungen vorteilhaft zu lösen, zum Beispiel die Methode der kleinsten Quadrate.

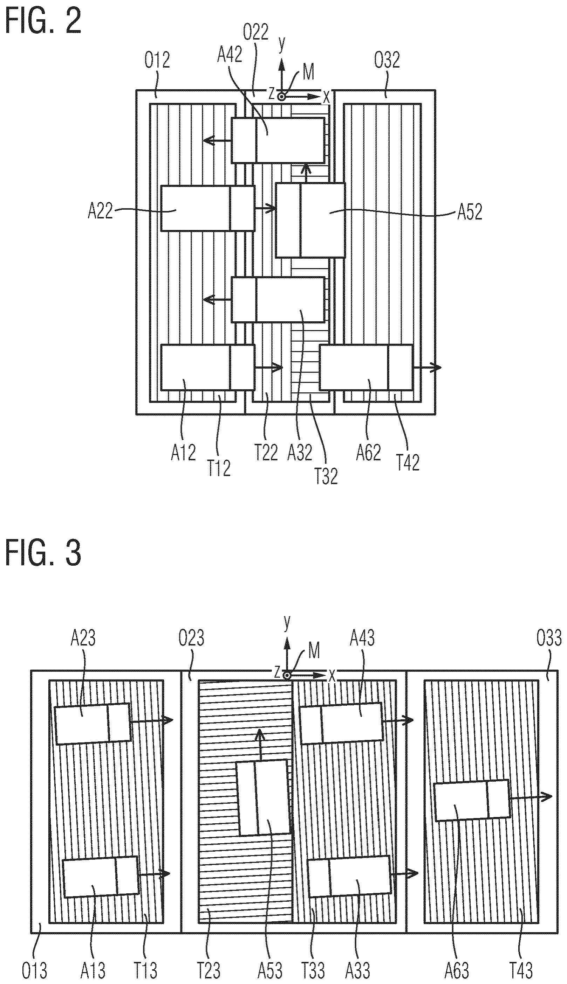

Eine Draufsicht auf ein zweites Ausführungsbeispiel der erfindungsgemäßen Positionsmesseinrichtung ist in Figur 2 dargestellt. Nachfolgend seien lediglich die maßgeblichen Unterschiede zum ersten Ausführungsbeispiel erläutert.

So zeichnet sich dieses Ausführungsbeispiel durch eine besonders kompakte Anordnung der wiederum sechs vorgesehenen Abtasteinheiten A12 - A62 aus. Hierzu sind die Abtasteinheiten mit gleicher Messrichtung auf angrenzenden Messteilungen ineinander verzahnt angeordnet. Über zwei benachbarte Oberflächen O1, O2 werden in der Abtastbaugruppe vier Abtasteinheiten A12, A32, A22, A42 mit gleicher Messrichtung verteilt angeordnet, und zwar nach ihrer Position in Hauptbewegungsrichtung geordnet abwechselnd mal der einen, mal der anderen Oberfläche O1, O2 bzw. den zugehörigen Messteilungen T12, T22 zugeordnet. Die Messrichtung dieser vier Abtasteinheiten A12, A32, A22, A42 sind wie aus Figur 2 ersichtlich jeweils senkrecht zur Hauptbewegungsrichtung, also der y-Richtung, orientiert. Die restlichen zwei Abtasteinheiten A52, A62 sind wie ersichtlich bezogen auf ihre Position in Hauptbewegungsrichtung vorteilhaft in den Lücken zwischen den bereits platzierten vier Abtasteinheiten A12, A32, A22, A42 in der Abtastbaugruppe angeordnet.

Der besondere Vorteil dieser Anordnung ist ihre kompakte Bauweise. Durch die verzahnte Anordnung können die Messteilungen T12 - T42 besonders schmal ausgebildet werden, selbst wenn dann die Abtasteinheiten A12 - A62 mit ihrem Bauraum gegebenenfalls in den Bereich einer anderen Oberfläche hineinragen. Als weiterer Vorteil erweist sich, dass der Abstand zwischen Abtasteinheiten gleicher Messrichtung auf gleicher Oberfläche, also z.B. der Abstand zwischen den Abtasteinheiten A12 und A22 bzw. der Abstand zwischen den Abtasteinheiten A32 und A42 trotz der kompakten Anordnung deutlich über der Breite einer einzelnen Abtasteinheit liegt. Daraus resultiert eine numerisch gut konditionierte Bestimmung der Bewegungsfreiheitsgrade. Dies liegt daran, dass aus der Messwert-Differenz zwischen zwei solchen Abtasteinheiten der Drehwinkel um eine Achse senkrecht zur Messteilungsebene gewonnen werden muss. Ist der Abstand der Abtasteinheiten groß genug, dann ist auch die vom Drehwinkel bewirkte Messwert-Differenz groß genug und kann auch trotz eventueller Störeinflüsse wie beispielsweise Rauschen sicher erfasst werden.

Eine Draufsicht auf ein drittes Ausführungsbeispiel der erfindungsgemäßen Positionsmesseinrichtung ist in Figur 3 dargestellt. Nachfolgend werden wiederum nur die maßgeblichen Unterschiede zu den vorhergehenden Ausführungsbeispielen erläutert.

Wie aus Figur 3 ersichtlich, sind in diesem Ausführungsbeispiel die Teilungsstriche der Messteilungen sowie die Messrichtungen der Abtasteinheiten gegenüber den beiden vorherigen Ausführungsbeispielen geringfügig verdreht angeordnet. Anders ausgedrückt: Die Teilungsstriche der Messteilungen sowie die Messrichtungen der Abtasteinheiten sind gegenüber der Hauptbewegungsrichtung oder einer Senkrechten auf die Hauptbewegungsrichtung geneigt angeordnet. Eine solche Ausbildung hat den Vorteil, dass im Fall einer Bewegung der Abtastbaugruppe entlang der Hauptbewegungsrichtung alle Abtasteinheiten verschiebungsabhängige Positionssignale liefern und dadurch immer eine Signalkompensation bzw. - korrektur möglich ist.

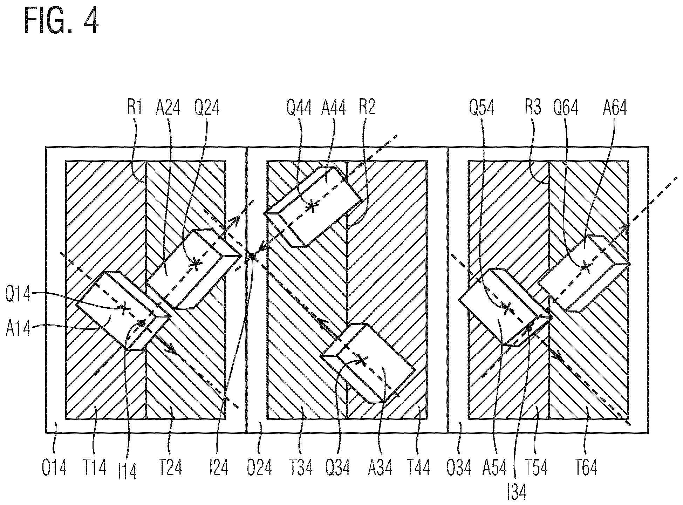

Ein viertes Ausführungsbeispiel der erfindungsgemäßen Positionsmesseinrichtung ist in Figur 4 in einer weiteren Draufsicht dargestellt. Nachfolgend werden erneut nur die maßgeblichen Unterschiede zu den vorhergehenden Ausführungsbeispielen erläutert.

Wie aus der Figur ersichtlich, sind jeder Oberfläche 014 - O34 jeweils zwei Messteilungen T14/T24, T34/T44, T54/T64 zugeordnet, deren Teilungsstriche in Bezug auf eine zentrale Symmetrieachse R1, R2, R3 spiegelsymmetrisch zueinander und geneigt gegenüber der Hauptbewegungsrichtung angeordnet sind, die auch hier wieder entlang der y-Richtung orientiert ist.

Jeder der drei Ebenen 014 - O34 ist weiterhin ein Paar von Abtasteinheiten A14 - A64 zugeordnet, deren Messrichtungen zueinander orthogonal sind. Die Messrichtungen liegen außerdem, analog zu den vorherigen Ausführungsbeispielen in der Ebene der zugehörigen Messteilungen T14 - T64.

In jede Abtasteinheit A14 - A64 sei vom Abtastort Q14 - Q64 ausgehend in Messrichtung jeweils fortgesetzt eine imaginäre Gerade gelegt. Für jedes der besagten Paare von Abtasteinheiten schneiden sich die beschriebenen Geraden in einem Punkt. So entstehen drei Punkte im dreidimensionalen Raum, die in Figur 4 mit 114, I24, I34 bezeichnet sind. Diese drei Punkte müssen eine Ebene aufspannen, d.h. sie dürfen nicht auf einer gemeinsamen Geraden liegen oder in einem Punkt zusammenfallen, sonst vermag die entsprechend aufgebaute Positionsmesseinrichtung nicht die sechs Bewegungsfreiheitsgrade unabhängig voneinander zu bestimmen. Von jedem der genannten Paare von Abtasteinheiten muss eine Messrichtung eine Komponente senkrecht zur genannten Ebene besitzen.

In diesem Ausführungsbeispiel kann es daher vorteilhaft sein, wenn für ein Paar von Abtasteinheiten zwischen den Abtasteinheiten der Versatz oder die Platzierung in Hauptbewegungsrichtung deutlich anders gewählt wird als für die anderen Paare. Beispielsweise ist gemäß Figur 4 der Abstand der Abtasteinheiten A34, A44 über der mittleren Oberfläche mit den beiden Messteilungen T34, T44 deutlich größer als der jeweilige Abstand der beiden anderen Paare von Abtasteinheiten. Dadurch liegt der Schnittpunkt I24 bei einer anderen z-Koordinate als die beiden Schnittpunkte I14, I34 der anderen Paare von Abtasteinheiten. Somit ist sichergestellt, dass die Schnittpunkte I14 - I34 nicht auf derselben Gerade liegen können.

Ferner kann für den Fall, dass die Oberflächen 013 - O34 jeweils Paare von Messteilungen für die beiden Messrichtungen aufweisen, vorgesehen sein, dass ein Paar dieser Messteilungen eine andere Orientierung der Teilungsstrukturen aufweist als die anderen beiden Paare von Messteilungen. Beispielsweise sind gemäß Figur 4 die Strichrichtungen des Paares von Messteilungen T34/T44 um 180 Grad gedreht gegenüber den Strichrichtungen der anderen Paare von Messteilungen T14/T24 bzw. T54/T64. Auch diese Maßnahme kann dazu beitragen, die Schnittpunkte I14-I34 weiter weg von einer gemeinsamen Geraden zu platzieren.

Neben den erläuterten Ausführungsbeispielen gibt es im Rahmen der vorliegenden Erfindung selbstverständlich noch weitere Ausführungsformen.

**Patentansprüche**

1. Positionsmesseinrichtung zur Erfassung der Relativposition zweier Objekte, wobei die Objekte entlang einer translatorischen Hauptbewegungsrichtung und in weiteren Freiheitsgraden relativ zueinander beweglich sind, mit

   - einem in der Hauptbewegungsrichtung längserstreckten Maßstabträger, der eine erste, eine zweite und eine dritte Oberfläche aufweist, durch die jeweils eine Ebene definiert ist und wobei auf jeder Oberfläche jeweils mindestens eine Messteilung angeordnet ist, und mit
   - einer relativ gegenüber dem Maßstabträger beweglichen Abtastbaugruppe mit mehreren Abtasteinheiten, die zur Erzeugung verschiebungsabhängiger Positionssignale aus der Abtastung der Messteilungen ausgebildet sind, wobei jeder Oberfläche mindestens eine Abtasteinheit zugeordnet ist,

   **dadurch gekennzeichnet,**
   **dass** die durch die zweite Oberfläche definierte Ebene den umgebenden Raum in zwei Halbräume unterteilt und in einem ersten Halbraum die erste Oberfläche mit mindestens einer Messteilung angeordnet ist und im zweiten Halbraum die dritte Oberfläche mit mindestens einer Messteilung angeordnet ist.

2. Positionsmesseinrichtung nach Anspruch 1, **dadurch gekennzeichnet, dass** der Schnittwinkel zwischen der ersten und zweiten Ebene sowie der Schnittwinkel zwischen der zweiten und dritten Ebene jeweils im Bereich zwischen 60° und 179° gewählt ist, wobei der Schnittwinkel zwischen der ersten und zweiten Ebene im ersten Halbraum angetragen sei und der Schnittwinkel zwischen der zweiten und dritten Ebene im zweiten Halbraum.

3. Positionsmesseinrichtung nach Anspruch 2, **dadurch gekennzeichnet, dass** die beiden Schnittwinkel derart gewählt sind, dass die erste Ebene und die dritte Ebene parallel zueinander orientiert sind.

4. Positionsmesseinrichtung nach mindestens einem der vorhergehenden Ansprüche, **dadurch gekennzeichnet, dass** die Schnittgerade zwischen der ersten und zweiten Ebene sowie die Schnittgerade zwischen der zweiten und dritten Ebene jeweils parallel zur Hauptbewegungsrichtung orientiert ist und sich die zweite Oberfläche zwischen den beiden genannten Schnittgeraden befindet.

5. Positionsmesseinrichtung nach mindestens einem der vorhergehenden Ansprüche, **dadurch gekennzeichnet, dass** die drei Oberflächen des Maßstabträgers, die Messteilungen und die Abtasteinheiten derart angeordnet und ausgebildet sind, dass die Lage der Abtastbaugruppe relativ zum Maßstabträger in sechs Bewegungsfreiheitsgraden bestimmbar ist.

6. Positionsmesseinrichtung nach mindestens einem der vorhergehenden Ansprüche, **dadurch gekennzeichnet, dass** mindestens zwei Oberflächen mindestens zwei Abtasteinheiten zugeordnet sind.

7. Positionsmesseinrichtung nach mindestens einem der vorhergehenden Ansprüche, **dadurch gekennzeichnet, dass** mindestens einer Oberfläche zwei Abtasteinheiten zugeordnet sind, die unterschiedliche Messrichtungen besitzen, wobei die Messrichtung einer Abtasteinheit diejenige translatorische Verschieberichtung angibt, entlang der die verschiebungsabhängigen Positionssignale erzeugbar sind.

8. Positionsmesseinrichtung nach Anspruch 7, **dadurch gekennzeichnet, dass** der Maßstabträger auf derjenigen Oberfläche, die den Abtasteinheiten mit unterschiedlichen Messrichtungen zugeordnet ist, zwei unterschiedlich orientierte Messteilungen aufweist, deren Teilungsstriche nicht parallel zueinander angeordnet sind.

9. Positionsmesseinrichtung nach mindestens einem der vorhergehenden Ansprüche, **dadurch gekennzeichnet, dass** die Messteilungen als optisch abtastbare Inkrementalteilungen ausgebildet sind.

10. Positionsmesseinrichtung nach Anspruch 7, **dadurch gekennzeichnet, dass**

    - jeder Oberfläche mindestens eine Abtasteinheit zugeordnet ist, deren Messrichtung senkrecht zur Hauptbewegungsrichtung orientiert ist, und
    - einer zweiten Oberfläche sowie einer weiteren Oberfläche jeweils mindestens zwei Abtasteinheiten zugeordnet sind, deren Messrichtungen senkrecht zur Hauptbewegungsrichtung orientiert sind, und
    - mindestens einer Oberfläche mindestens eine Abtasteinheit zugeordnet ist, deren Messrichtung parallel zur Hauptbewegungsrichtung orientiert ist.

11. Positionsmesseinrichtung nach Anspruch 7, **dadurch gekennzeichnet, dass**

    - zwei benachbarten Oberflächen vier entlang der Hauptbewegungsrichtung angeordnete Abtasteinheiten mit zur Hauptbewegungsrichtung senkrechter Messrichtung zugeordnet sind und benachbarte Abtasteinheiten jeweils unterschiedlichen Oberflächen zugeordnet sind, und
    - zwei weitere Abtasteinheiten, von denen mindestens eine der weiteren Oberfläche zugeordnet ist, entlang der Hauptbewegungsrichtung in Lücken zwischen den vier anderen Abtasteinheiten angeordnet sind.

12. Positionsmesseinrichtung nach Anspruch 7 **dadurch gekennzeichnet, dass** die Teilungsstriche der Messteilungen sowie die Messrichtungen der Abtasteinheiten gegenüber der Hauptbewegungsrichtung oder einer Senkrechten auf die Hauptbewegungsrichtung geneigt angeordnet sind.

13. Positionsmesseinrichtung nach Anspruch 7, **dadurch gekennzeichnet, dass**

    - jeder Oberfläche zwei Messteilungen zugeordnet sind, deren Teilungsstriche in Bezug auf eine zentrale Symmetrieachse spiegelsymmetrisch zueinander und geneigt gegenüber der Hauptbewegungsrichtung angeordnet sind, und
    - den beiden Messteilungen auf jeder Oberfläche jeweils eine Abtasteinheit zugeordnet ist und die beiden Abtasteinheiten einer Oberfläche zueinander orthogonale Messrichtungen besitzen.

## FIG. 1a

## FIG. 1b

# FIG. 2

# FIG. 3

# FIG. 4

EUROPÄISCHER RECHERCHENBERICHT

**Nummer der Anmeldung**

EP 25 20 2422

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 112 197 727 A (HEIDENHAIN GMBH DR JOHANNES) 8. Januar 2021 (2021-01-08) * Anspruch 8; Abbildung 1 * ----- | 1-13 | INV. G01B11/00 G01B7/00 |
| A | CN 102 317 737 A (LEICA GEOSYSTEMS AG) 11. Januar 2012 (2012-01-11) * Abbildung 9 * ----- | 1-13 | |
| A | EP 2 795 249 B1 (PRUEFTECHNIK DIETER BUSCH GMBH [DE]) 25. September 2019 (2019-09-25) * Abbildungen 1-5 * ----- | 1-13 | |
| A | CN 116 086 360 A (JI HUA LABORATORY) 9. Mai 2023 (2023-05-09) * Abbildungen 1-3 * ----- | 1-13 | |

**RECHERCHIERTE SACHGEBIETE (IPC)**

G01B

Der vorliegende Recherchenbericht wurde für alle Patentansprüche erstellt

| Recherchenort | Abschlußdatum der Recherche | Prüfer |
|---|---|---|
| München | 25. Februar 2026 | Malcoci, Andrei |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 20 2422

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2026

| Im Recherchenbericht angeführtes Patentdokument | Datum der Veröffentlichung | Mitglied(er) der Patentfamilie | Datum der Veröffentlichung |
|---|---|---|---|
| CN 112197727 A | 08-01-2021 | CN 112197727 A | 08-01-2021 |
| | | DE 102019210023 A1 | 14-01-2021 |
| | | EP 3764065 A1 | 13-01-2021 |
| | | JP 7402108 B2 | 20-12-2023 |
| | | JP 2021012187 A | 04-02-2021 |
| | | KR 20210006838 A | 19-01-2021 |
| | | US 2021010801 A1 | 14-01-2021 |
| CN 102317737 A | 11-01-2012 | BR PI1008570 A2 | 08-03-2016 |
| | | CN 102317737 A | 11-01-2012 |
| | | EP 2219010 A1 | 18-08-2010 |
| | | EP 2396622 A1 | 21-12-2011 |
| | | US 2012041712 A1 | 16-02-2012 |
| | | WO 2010092131 A1 | 19-08-2010 |
| EP 2795249 B1 | 25-09-2019 | DE 102011119732 A1 | 06-06-2013 |
| | | EP 2795249 A1 | 29-10-2014 |
| | | WO 2013079525 A1 | 06-06-2013 |
| CN 116086360 A | 09-05-2023 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017080612 A1

- EP 0163362 A1